# EUROPÄISCHE PATENTSCHRIFT

(11) **EP 4 021 807 B1**
(45) Veröffentlichungstag und Bekanntmachung des Hinweises auf die Patenterteilung: **16.04.2025**
(21) Anmeldenummer: 20764969.0
(22) Anmeldetag: 27.08.2020
(51) Int. Cl.: B64D 11/06

(54) **SITZANORDNUNG FÜR EINE KABINE EINES TRANSPORTMITTELS**
SEAT ASSEMBLY FOR A CABIN OF A MEANS OF TRANSPORTATION
ENSEMBLE DE SIÈGES POUR UNE CABINE D'UN MOYEN DE TRANSPORT

(30) Priorität: 30.08.2019 DE 102019123321
(43) Veröffentlichungstag der Anmeldung: 06.07.2022
(73) Patentinhaber: Airbus Operations GmbH, 21129 Hamburg (DE)
(72) Erfinder: SCHMIDT-SCHÄFFER, Tobias, 21129 Hamburg (DE)
(74) Vertreter: LKGLOBAL Lorenz & Kopf Patentanwalt Attorney at Law PartG mbB
(86) Internationale Anmeldenummer: PCT/EP2020/074000
(87) Internationale Veröffentlichungsnummer: WO 2021/037995

(56) Entgegenhaltungen:
- EP-A1- 3 378 770
- DE-A1- 102015 105 540
- US-A1- 2007 040 434
- US-A1- 2017 240 283

## Beschreibung

### TECHNISCHES GEBIET

Die Erfindung betrifft eine Sitzanordnung für eine Kabine eines Transportmittels, eine Kabine eines Transportmittels und ein Transportmittel mit einem Rumpf und mindestens einer darin ausgebildeten Kabine.

### HINTERGRUND DER ERFINDUNG

Transportmittel, wie etwa Flugzeuge, Schienenfahrzeuge, Wasserfahrzeuge oder Reisebusse können Passagiersitzbereiche aufweisen, welche üblicherweise über Anordnungen mit Sitzen verfügen. Insbesondere bei Transportmitteln für längere Reisestrecken sind auch Sitzanordnungen bekannt, die einen besonders hohen Sitz'- und Reisekomfort bieten. Die Sitzanordnungen können etwa neben den eigentlichen Sitzen auch Fußauflagen bzw. Ottomanen mit darin integrierten Fußauflagen aufweisen. Ist der Sitz zusätzlich dazu verschiebbar, könnte der Sitz zusammen mit einer Fußauflage eine Liegeposition bereitstellen.

Bekannte Sitzanordnungen mit erhöhtem Komfort sind überwiegend in Verkehrsflugzeugen für Langstreckenflüge zu finden, die einen größeren Rumpfdurchmesser aufweisen und damit über einen relativ großen Bauraum in der Kabine verfügen. Dieser erlaubt etwa die Realisierung von zwei Gängen und zwei äußeren und einem inneren Passagiersitzbereich. Sitzanordnungen für Flugzeuge mit kleineren Durchmessern und einer Kabine mit Mittelgang sind indes lediglich mit zwei Sitzmodulen bekannt.

US 2017/ 240283 A1 zeigt in einer veranschaulichenden Ausführungsform eine Sitzanordnung der Premiumklasse für eine Flugzeugkabine mindestens drei Passagiersuiten, wobei jede Passagiersuite einen Sitz umfasst, der zwischen einer aufrechten Position und einer horizontalen Bettposition bewegt werden kann, und eine Ottomane, die einen Oberflächenbereich der Bettposition erweitert. Die Passagiersuiten können gemeinsam eine verschachtelte Anordnung bilden, die in der Lage ist, sich mit identischen Passagiersuite-Anordnungen in Längsrichtung innerhalb des Kabinenbereichs zu verschachteln. Mindestens zwei der Ottomanen der Passagiersuiten können in der Einbaulage längsversetzt sein. Jede Passagiersuite in der Anordnung hat direkten Zugang zum Gang, ohne dass eine andere Passagiersuite dazwischenkommt.

EP 3 378 770 A1 betrifft eine Sitzanordnung, umfassend einen ersten und einen zweiten Sitz, die mit ihren Rückenlehnen einander gegenüberliegend angeordnet sind, wobei der erste und der zweite Sitz voneinander verschiebbar sind von einer Sitzposition in eine Liegeposition, möglicherweise mit der Möglichkeit, in jeder der Zwischenpositionen anzuhalten, wobei ein Teil der Trennwand seitlich in Bezug auf die Sitze angeordnet ist, die sich seitlich an einer Seite des ersten und zweiten Sitzes erstrecken und auf einer Seite in einem Abschnitt enden, der eine Fußstütze enthält, die vor dem jeweiligen Sitz angeordnet ist und auf der anderen Seite im Abstand von der jeweiligen Seite der Trennwand des Sitzes, so dass ein Ein-/Ausstiegsdurchgang frei bleibt und somit Zugang zu den Sitzen, wobei der Ein-/Ausgangsdurchgang zu einer Spur zum Erreichen des ersten oder des zweiten Sitzes führt, die Trennwände, die an ihrem jeweiligen Ende, das den Ein-/Ausstiegskanal bildet, außen jeweils eine Fußstütze vorsehen, die vor jeweils einem dritten und vierten Sitz positioniert ist, die in Bezug auf den jeweiligen Sitz, der auf der gegenüberliegenden Seite derselben Trennwand angeordnet ist, in entgegengesetzter Richtung angeordnet sind, wobei der dritte und der vierte Sitz ebenfalls in der Lage sind Bewegen Sie sich von einer sitzenden Position in eine liegende Position, möglicherweise mit der Möglichkeit, in jeder Zwischenposition anzuhalten. DE 10 2015 105540 A1 beschreibt eine Passagiersitzanordnung für eine Fahrzeugkabine, die mindestens eine erste Gruppe von Passagiersitzen mit einem ersten Passagiersitz und einem zweiten Passagiersitz, mindestens einen dritten Passagiersitz, und einen zu einer Längsachse parallel verlaufenden Gang aufweist, wobei der erste Passagiersitz oder der dritte Passagiersitz direkt an dem Gang und mit zu diesem paralleler Sitzrichtung angeordnet ist, wobei eine Sitzrichtung des zweiten Passagiersitzes um einen ersten Winkel (α) von mindestens 2° zu der Sitzrichtung des ersten Passagiersitzes gedreht ist und wobei die erste Gruppe von Passagiersitzen und der dritte Passagiersitz nebeneinander angeordnet sind und entlang der Längsachse einen Längsversatz (L) zueinander aufweisen. US 2007/040434 A1 zeigt eine Passagiersitzanordnung, die eine erste Sitzeinheit umfasst, die in eine erste Richtung zeigt; eine erste Ottomane mit einer ersten Stützfläche, die so positioniert ist, dass sie die Füße eines in der ersten Sitzeinheit sitzenden Passagiers aufnehmen kann; eine zweite Sitzeinheit, die in eine zweite Richtung zeigt, die im Allgemeinen der ersten Richtung entgegengesetzt ist; und eine zweite Ottomane, die seitlich neben der ersten Ottomane angeordnet ist und eine zweite Stützfläche aufweist, die so positioniert ist, dass sie die Füße eines in der zweiten Sitzeinheit sitzenden Passagiers aufnimmt.

### ZUSAMMENFASSUNG DER ERFINDUNG

Es ist folglich eine Aufgabe der Erfindung, eine Sitzanordnung zu schaffen, mit der auch Transportmittel mit geringer Kabinenbreite und insbesondere einem einzelnen Gang ausgestattet und eine hohe Anzahl von Passagieren mit hohem Komfort untergebracht werden können.

Die Aufgabe wird durch eine Sitzanordnung mit den Merkmalen des unabhängigen Anspruchs 1 gelöst. Vorteilhafte Ausführungsformen und Weiterbildungen sind den Unteransprüchen und der nachfolgenden Beschreibung zu entnehmen.

Es wird eine Sitzanordnung für eine Kabine eines Transportmittels nach Anspruch 1 vorgeschlagen.

Die erfindungsgemäße Sitzanordnung ist folglich auf zwei äußere Passagiersitzbereiche beschränkt, die durch einen einzelnen Gang voneinander getrennt sind. Die Besonderheit der erfindungsgemäßen Sitzanordnung liegt darin, dass beide Passagiersitzbereiche jeweils drei nebeneinander angeordnete Sitzmodule aufweisen. Durch den Versatz insbesondere des äußeren, dritten Sitzmoduls in Längsrichtung wird dem Benutzer das Erreichen dieses äußeren Sitzmoduls vereinfacht. Das Durchschreiten des ersten oder zweiten Sitzmoduls ist nicht erforderlich.

In diesem Zusammenhang ist eine Ottomane als eine Einbaukomponente zu verstehen, die besonders bevorzugt eine bequeme Möglichkeit zum Ablegen von Füßen aufweist. Eine Ottomane ist dabei in Sitzrichtung vor dem betreffenden Sitz angeordnet und weist eine an die Höhe einer Sitzfläche angepasste Bauhöhe oder Höhe einer Fußauflage auf. Die Ottomane kann fest auf dem Kabinenfußboden angeordnet sein oder sie kann zumindest entlang der Längsrichtung der Kabine in Maßen bewegbar sein. Zusätzlich zu der Möglichkeit der Integration einer Fußauflage könnte auch eine Ablagefläche zum Ablegen persönlicher Gegenstände vorgesehen werden. Zudem ist denkbar, auch elektronische Einbauten, etwa einen Bildschirm oder mit dem Bildschirm gekoppelte Komponenten zu beherbergen.

Der Sitz des dritten Sitzmoduls befindet sich neben der Ottomane oder der Fußauflage des zweiten Sitzmoduls. Der Sitz muss nicht zwangsläufig vollständig und ausschließlich neben der Fußauflage oder der Ottomane angeordnet sein, sondern die beiden Komponenten könnten sich in Längsrichtung beispielsweise auch lediglich teilweise überschneiden. Der Sitz könnte demnach entlang der Längsrichtung auch etwas weiter verschoben sein.

Der Zwischenraum zwischen der Ottomane und dem Sitz des dritten Sitzmoduls ist auf einer zu dem Gang gewandten Seite offen. Betritt ein Benutzer eine zwischen den zwei in Längsrichtung aufeinanderfolgenden ersten Sitzmodulen befindliche Lücke, kann er direkt an dem zweiten Sitzmodul zu und in das dritte Sitzmodul gelangen. Das erste Sitzmodul kann etwa von dem Gang direkt aus erreichbar sein und erfordert keine besonderen Vorkehrungen hierfür.

Das zweite Sitzmodul könnte von einer Lücke zwischen zwei voreinander liegenden ersten Sitzmodulen erreicht werden. Der Benutzer könnte an der Ottomane oder der Fußauflage des zweiten Sitzmoduls in Längsrichtung entlang gehen. Dafür könnte es sich anbieten, dass die Ottomane oder die Fußauflage einen entsprechenden Raum bereitstellen kann, durch den der Benutzer zu dem Sitz des zweiten Sitzmoduls schreiten kann. Es wäre auch denkbar, die Ottomane oder die Fußauflage in eine Nutzstellung und eine Durchgangsstellung zu verbringen, so dass der Sitz des zweiten Sitzmoduls erreichbar ist.

Folglich kann durch die erfindungsgemäße Sitzanordnung eine sehr kompakte Gestaltung der Kabine mit sehr komfortablen Sitzmodulen erreicht werden. Die Raumnutzung ist auch deswegen besonders gut, da sich das zweite und das dritte Sitzmodul den gleichen Zugang zwischen zwei aufeinanderfolgenden ersten Sitzmodulen teilen können. Transportmittel, die lediglich einen einzelnen Gang aufweisen, können mit zwei Anordnungen von jeweils drei nebeneinander liegenden Sitzmodulen ausgestattet werden. Hieraus kann sich eine signifikante Bauraumeinsparung ergeben, die beispielsweise mit zusätzlichen Sitzen oder Sitzmodulen ausgefüllt wird.

In einer besonders vorteilhaften Ausführungsform weisen die Ottomanen und/oder die Fußauflage der zweiten und dritten Sitzmodule eine geringere Breite als der zugehörige Sitz auf. Dadurch kann eine Verschachtelung der Sitzmodule in lateraler Richtung verbessert werden. Durch den starken Versatz der Sitze des zweiten und des dritten Sitzmoduls in Längsrichtung ist die durch das zweite Sitzmodul und das dritte Sitzmodul gemeinsam eingenommene Breite deutlich geringer als die Breiten der beiden Sitze zusammen.

Es ist bevorzugt, dass eine lateral außenliegende Begrenzung des Sitzes des zweiten Sitzmoduls näher an der zu dem jeweiligen Passagiersitzbereich gehörenden Kabinenwandung liegt als eine lateral innenliegende Begrenzung des Sitzes des benachbarten dritten Sitzmoduls. Die außenliegende Begrenzung des Sitzes des zweiten Sitzmoduls kann in einem Bereich von ungefähr 3 Zoll (ca. 7,6 cm) bis ungefähr 8 Zoll (ca. 20,3 cm) näher an der Kabinenwandung liegen als die innenliegende Begrenzung des Sitzes des dritten Sitzmoduls. Damit wird folglich eine größtmögliche Dichte in lateraler Richtung erreicht, wobei die Kombination aus einem zweiten und einem dritten Sitzmodul jeweils gerade Außenkanten aufweist, die parallel zu dem Gang verlaufen.

Das zweite Sitzmodul weist eine klappbare Fußauflage auf, die dazu ausgebildet ist, einen unter der Fußauflage befindlichen Fußboden zum Erreichen des Sitzes des zweiten Sitzmoduls bedarfsweise freizugeben. Die klappbare Fußauflage erleichtert den Zutritt zu dem zweiten Sitzmodul bzw. dem darin befindlichen Sitz. Durch die Klappbarkeit der Fußauflage wird der Komfort des betreffenden Benutzers nicht eingeschränkt. Die Klappfunktion könnte beispielsweise durch ein Scharnier an einer Wandung des zweiten Sitzmoduls oder des benachbarten, dritten Sitzmoduls erreicht werden. Zum Arretieren oder Halten der Fußauflage könnte sowohl das Scharnier selbst, als auch ein gegenüber dem Scharnier angeordneter mechanischer Anschlag Verwendung finden.

Bevorzugt sind das erste Sitzmodul und das zweite Sitzmodul in Längsrichtung derart zueinander versetzt, dass die Armlehnen der Sitze dieser beiden Sitzmodule sich in Längsrichtung im Wesentlichen nicht überschneiden. Dadurch können zwei zueinander benachbart sitzende Benutzer ihre Armlehnen bequem nutzen, ohne dass ihre Arme sich versehentlich berühren. Der Versatz des ersten Sitzmoduls und des zweiten Sitzmoduls in Längsrichtung könnte auf eine Armlehnenlänge beschränkt sein oder knapp darüber liegen.

Es ist vorteilhaft, wenn der Sitz des ersten Sitzmoduls in Längsrichtung vor dem Sitz des zweiten Sitzmoduls liegt. Dadurch wird ein annähernd geradliniger, d.h. nicht geknickter und intuitiv zu durchschreitender Gang zum Erreichen des zweiten und des dritten Sitzmoduls realisiert.

Es ist vorstellbar, dass die mindestens eine Sitzreihe mehrere Sitzreihen aufweist, wobei zwischen den ersten Sitzmodulen und zweiten Sitzmodulen aufeinanderfolgender Sitzreihen ein Abstand von mindestens 22 cm vorliegt, so dass das zweite und dritte Sitzmodul durch einen gemeinsamen Durchgang erreichbar sind. Eine solche Durchgangsbreite erlaubt eine relativ dichte Staffelung in Längsrichtung und ermöglicht dennoch das Durchschreiten der Lücke bzw. des Zwischenraums zwischen aufeinanderfolgenden Sitzmodulen. Da der Durchgang auf einer Seite von einer Ottomane oder Fußauflage begrenzt wird, die jeweils eine recht niedrige Höhe aufweist, wird ein Benutzer in seinen Komfortempfinden nicht eingeschränkt.

Die Sitzmodule könnten bevorzugt eine zumindest bereichsweise den jeweiligen Sitz umlaufende Trennwand aufweisen. Die Privatsphäre jedes Benutzers wird durch die Trennwand deutlich verbessert und das Komfortempfinden wird trotz der Anzahl der Sitzmodule nicht eingeschränkt.

Vorteilhaft geformt mit einem S-Schlag könnte zumindest die Trennwand zwischen gangseitigem und mittlerem Sitz ausgebildet sein, um den Zugang zu den Sitzen zu verbessern. Eine weitere vorteilhafte Ausführungsform ermöglicht eine Vergrößerung des Raumangebots wenn eine S-Schlag-Form der Trennwand im und unmittelbar vor dem Schulterbereich bei beiden an je eine Trennwand angrenzenden Sitzen vorgesehen wird, wobei eine konstante Gangbreite zwischen den zwei Trennwänden gewährleistet bleibt.

Die Sitze der Sitzmodule weisen jeweils eine Sitzrichtung auf, die parallel zu der Längsachse verlaufen. Dadurch unterscheidet sich die erfindungsgemäße Sitzanordnung deutlich von anderen Anordnungen, bei denen die Sitzrichtungen teilweise schräg zu dem angrenzenden Gang verlaufen. Dadurch ist es nicht erforderlich, verschiedene Maßnahmen zu ergreifen, um einen Durchgang eines Benutzers durch den Gang zu ermöglichen.

Wie bereits angedeutet kann das erste Sitzmodul einen in den Gang weisenden Zugang aufweisen. Das erste Sitzmodul kann folglich ohne weiteres und unabhängig von den anderen, lateral benachbarten Sitzmodulen erreicht werden.

In einer vorteilhaften Ausführungsform weist mindestens eine der Ottomanen oder der Fußauflage ein Staufach oder eine Ablagefläche auf. Persönliche Gegenstände eines Benutzers können folglich in unmittelbarer Nähe direkt in dem Sitzmodul aufbewahrt werden. Eine Ablagefläche könnte allerdings auch für Kabinenpersonal zur Ablage von Gegenständen dienen, die beispielsweise beim Servieren von Speisen und Getränken kurzzeitig abgelegt werden müssen.

Es kann auch vorteilhaft sein, einen ausziehbaren Tisch oder einen segmentierten Tisch statt oder in Kombination mit der Ablagefläche vorzusehen. Ein ausziehbarer Tisch kann möglicherweise auch für eine Befestigung einer IFE-Einheit oder eines ausklappbaren Bildschirmes vorgesehen sein.

Die Erfindung betrifft ferner eine Kabine für ein Transportmittel mit mindestens einer vorangehend erläuterten Sitzanordnung. Die Kabine kann in einem Rumpf des Transportmittels angeordnet sein.

Die Kabine könnte eine Breite aufweisen, die in einem Bereich von 3,7-4,5 m liegt. Eine derartige Kabine könnte auch in kleineren Verkehrsflugzeugen realisiert werden, die Abmessungen aufweisen, die deutlich unterhalb von üblichen Langstreckenflugzeugen liegen.

Die Erfindung betrifft schließlich ein Transportmittel mit einem Rumpf und mindestens einer vorangehend dargestellt ausgebildeten Kabine.

Es werden besondere Vorteile erreicht, wenn das Transportmittel ein Verkehrsflugzeug ist. In dem darin angebotenen, beschränkten Bauraum wird folglich eine beträchtliche Erhöhung des persönlichen Komfortempfindens für Reisende erreicht.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine Sitzanordnung in einer Kabine eines Flugzeugs.
Fig. 2 zeigt eine dreidimensionale Darstellung eines ersten und eines zweiten Sitzmoduls.
Fig. 3a bis 3c zeigen unterschiedlich modifizierte Sitzanordnungen.
Fig. 4 zeigt eine dreidimensionale Darstellung eines ersten Sitzmoduls.
Fig. 5 zeigt eine perspektivische Ansicht eines Passagiersitzbereichs.
Fig. 6 zeigt schließlich ein Flugzeug mit einem Rumpf und einer darin ausgebildeten Kabine mit einer darin ausgebildeten Sitzanordnung.

### DETAILLIERTE DARSTELLUNG EXEMPLARISCHER AUSFÜHRUNGSFORMEN

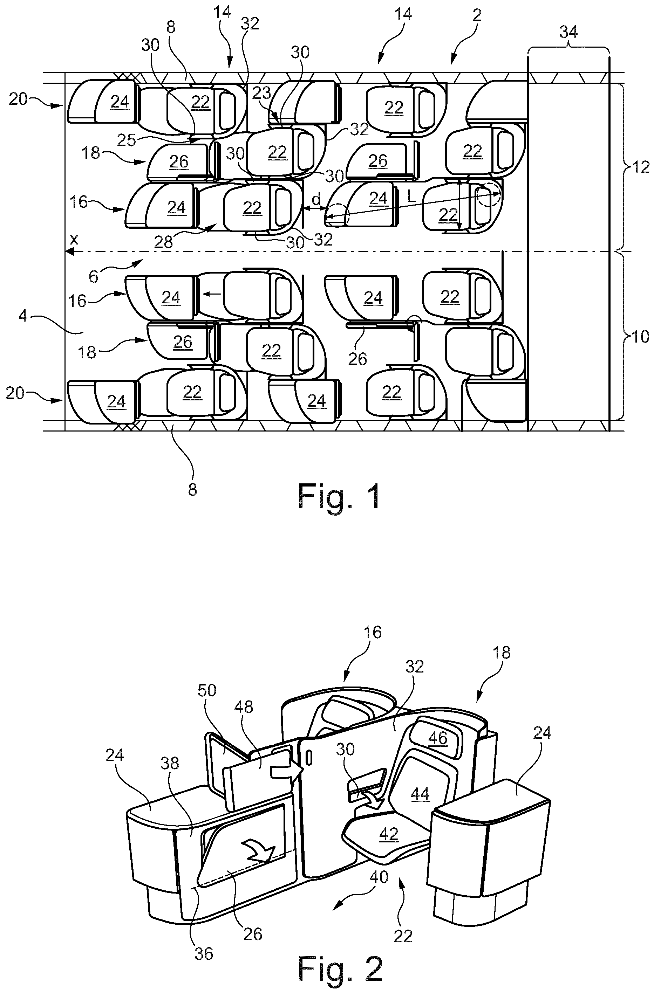

Fig. 1 zeigt eine Sitzanordnung 2 für eine Kabine 4 eines Transportmittels, wobei die Kabine 4 beispielhaft als eine Flugzeugkabine ausgeführt ist. Diese weist einen Gang 6 auf, der sich in einer Längsrichtung bzw. entlang einer Längsachse x erstreckt. Die Längsrichtung x könnte mit der Längsachse in einem flugzeugfesten Koordinatensystem übereinstimmen. Der Gang 6 ist exemplarisch geradlinig und weist eine im wesentlichen konstante Breite auf. Diese könnte mindestens 15 Zoll (ungefähr 38 cm) und bevorzugt mindestens 16 Zoll (ungefähr 40,6 cm) betragen, um das Befördern eines Full-Size-Trolleys zu erlauben. Parallel zu dem Gang 6 sind zwei voneinander beabstandete Kabinenwandungen 8 vorgesehen, die die Kabine 4 seitlich in lateraler Richtung begrenzen. Zwischen jeweils einer Kabinenwandung 8 und dem Gang befinden sich äußere Passagiersitzbereiche 10 (in Längsrichtung links) und 12 (in Längsrichtung rechts).

In den Passagiersitzbereichen 10 und 12, die durch den Gang 6 voneinander getrennt sind, sind mehrere Sitzreihen 14 vorgesehen. Diese weisen ein erstes Sitzmodul 16 auf, das in der Kabine 4 innenliegend und zu dem Gang 6 gewandt ist. Weiter außen und direkt zu dem ersten Sitzmodul 16 benachbart ist ein zweites Sitzmodul 18 angeordnet. Weiter nach außen schließt sich ein drittes Sitzmodul 20 an. Alle Sitzmodule 16, 18 und 20 weisen jeweils einen Sitz 22 auf. Das erste Sitzmodul 16 und das dritte Sitzmodul 20 weisen zusätzlich eine Ottomane 24 auf. Das zweite Sitzmodul 18 besitzt indes eine klappbare Fußauflage 26. Die einzelnen Sitzmodule 16, 18 und 20 sind nicht direkt nebeneinander angeordnet, sondern in Längsrichtung x zueinander verschoben.

Das dritte Sitzmodul 20, welches direkt an die jeweilige Kabinenwandung 8 angrenzt, ist in Längsrichtung x derart zu dem zweiten Sitzmodul 18 versetzt, dass der Sitz 22 des dritten Sitzmoduls 20 in Querrichtung an die Fußauflage 26 des zweiten Sitzmoduls 18 anschließt. Dadurch wird ermöglicht, von dem Gang 6 aus an dem ersten Sitzmodul 16 und dem zweiten Sitzmodul 18 vorbei zu dem Sitz 22 des dritten Sitzmoduls 20 zu gelangen. Ein Durchschreiten des ersten Sitzmoduls 16 und des zweiten Sitzmoduls 18 ist daher nicht erforderlich.

Wie in der Zeichnungsebene weiter rechts dargestellt ist, ist eine Durchgangsbreite d vorgesehen, die relativ gering sein könnte. Beispielhaft werden mindestens 9 Zoll (ca. 22 cm) genannt. Dies ist insbesondere aufgrund der relativ niedrigen Höhe der Ottomane 24 des erste Sitzmoduls 16 problemlos möglich, denn der Benutzer, der zwischen zwei aufeinanderfolgenden ersten Sitzmodulen 16 hindurchschreitet, fühlt sich nicht beengt.

Der Sitz 22 des zweiten Sitzmoduls 18 ist ebenso direkt von dem Gang 6 aus erreichbar, indem die Fußauflage 26 in eine vertikale Position geschwenkt wird. Auch zum Erreichen des zweiten Sitzmoduls 18 ist ein Durchschreiten des ersten Sitzmoduls 16 nicht erforderlich. Die besonders vorteilhafte Raumausnutzung in der Kabine 4 wird auch durch die gemeinsame Nutzung eines Durchgangs von dem Gang 6 zu dem zweiten Sitzmodul 18 und dem dritten Sitzmodul 20 erreicht.

Das erste Sitzmodul 16 ist ebenso direkt und unmittelbar von dem Gang 6 aus erreichbar, denn ein Zugang 28 zwischen dem Sitz 22 und der Ottomane 24 weist direkt in den Gang 6.

Die Sitze 22 weisen jeweils zwei seitlich angeordnete Armlehnen 30 auf. Die Sitze 22 des ersten Sitzmoduls 16 und des zweiten Sitzmoduls 18 sind in Längsrichtung so zueinander versetzt, dass die Armlehne 30, die jeweils zu dem benachbarten Sitzmodul 16 bzw. 18 gerichtet ist, in Längsrichtung an die Armlehne 30 des Sitzes 22 des jeweils anderen Sitzmoduls 16 bzw. 18 anschließt. Benutzer, die jeweils auf dem Sitz 22 sitzen, können folglich bequem und ungestört von dem jeweils benachbarten Benutzer die Armlehnen 30 nutzen. Bei dem dritten Sitzmodul 20 ist der Sitz 22 so weit von den Sitzen der anderen Sitzmodule 16 und 18 beabstandet, dass auch dort eine völlig ungestörte Nutzung der Armlehnen 30 möglich ist.

Jedes Sitzmodul 16, 18 und 20 weist eine zumindest bereichsweise den jeweiligen Sitz 22 umlaufende Trennwand 32 auf, die zum Abschirmen des jeweiligen Benutzers geeignet ist. Die Benutzer erhalten dadurch ein gewisses Maß an Privatsphäre, so dass das Komfortempfinden jedes Benutzers deutlich gesteigert wird.

Vorteilhaft geformt mit einem S-Schlag könnte zumindest die Trennwand 32 zwischen gangseitigem und mittlerem Sitz 22 ausgebildet sein, um den Zugang zu den Sitzen zu verbessern.

Eine weitere vorteilhafte Ausführungsform ermöglicht eine Vergrößerung des Raumangebots wenn eine S-Schlag-Form der Trennwand 32 im und unmittelbar vor dem Schulterbereich bei beiden an je eine Trennwand 32 angrenzenden Sitzen 22 vorgesehen wird, wobei eine konstante Gangbreite zwischen den zwei Trennwänden gewährleistet bleibt.

In dem gezeigten Ausführungsbeispiel weisen die Ottomane 24 des dritten Sitzmoduls 20 und die Fußauflage 26 des zweiten Sitzmoduls 18 eine geringere Breite auf, als der jeweils zugehörige Sitz 22. Dadurch kann in lateraler Richtung durch die lateraler benachbarte Anordnung von Fußauflage 26 und Sitz 22 deutlich an Bauraum eingespart werden, ohne dass der Komfort eines einzelnen Benutzers leidet.

Die Ottomane 24 des dritten Sitzmoduls 20 grenzt bündig an die Kabinenwandung 8 an. Die Fußauflage 26 grenzt indes bündig an die Ottomane 24 des ersten Sitzmoduls 16 an. Die Ottomane 24 des ersten Sitzmoduls 16 könnte folglich eine im Wesentlichen gleiche Breite aufweisen, wie der zugehörige Sitz 22.

Die Sitze 22 des ersten Sitzmoduls 16 und des zweiten Sitzmoduls 18 sind, wie vorangehend bereits erwähnt, lediglich um eine kurze Strecke entlang der Längsrichtung x zueinander versetzt und somit praktisch nebeneinander angeordnet. In dem gezeigten Fall ist der Sitz 22 des ersten Sitzmoduls 16 in Längsrichtung x etwas nach vorne versetzt. Es könnte allerdings auch umgekehrt realisiert werden, dass der Sitz 22 des zweiten Sitzmoduls 18 nach vorne versetzt ist.

Lediglich beispielhaft werden Sitzbreiten von ungefähr 23 Zoll (etwa 58,5 cm) bereitgestellt. Es ist denkbar, die Sitzbreiten auch bis auf ungefähr 20 Zoll (ca. 50,8 cm) zu reduzieren. Eine diagonale Erstreckungslänge l der einzelnen Sitzmodule 16, 18 und 20 könnte bei ungefähr 75 Zoll (etwa 190,5 cm) oder mehr liegen. Diese Erstreckung ist ein Maß für die realisierbare Bettlänge, falls die Sitzmodule 16, 18 und 20 eine Liegeposition einnehmen können. Die Sitze 22 der einzelnen Sitzmodule 16, 18 und 20 sind dafür etwa parallel zu der Längsrichtung x verschiebbar, so dass eine geschlossene Liegefläche (mit verschwenkter Rückenlehne) in den einzelnen Sitzmodulen 16, 18 und 20 erreicht werden könnte. Die diagonale Erstreckungslänge l könnte beispielhaft in einem Bereich von 70 bis 78 Zoll (etwa 177,8 cm bis 198,1 cm) liegen. Diese Maße können bedarfsweise, je nach individuellen Auslegungskriterien, auch um wenige cm nach oben oder unten angepasst werden.

Des Weiteren kann eine lateral außenliegende Begrenzung des Sitzes 22 des zweiten Sitzmoduls 18 näher an der zu dem jeweiligen Passagiersitzbereich gehörenden Kabinenwandung liegt als eine lateral innenliegende Begrenzung 25 des Sitzes 22 des benachbarten dritten Sitzmoduls 20. Die außenliegende Begrenzung 23 des Sitzes 22 des zweiten Sitzmoduls 18 könnte, wie weiter vorangehend erwähnt, in einem Bereich von ungefähr 3 Zoll (ca. 7,6 cm) bis ungefähr 8 Zoll (ca. 20,3 cm) näher an der Kabinenwandung 8 liegen als die innenliegende Begrenzung 25 des Sitzes 22 des dritten Sitzmoduls 20. Hierdurch wird auch eine in lateraler Richtung sehr gute Raumausnutzung erreicht.

Aufgrund der besonders vorteilhaft geschachtelten Anordnung kann in Längsrichtung deutlich an Bauraum gespart werden, der lediglich qualitativ und beispielhaft als zusätzlicher Bauraum 34 angedeutet wird. Der Bauraum wird weiterhin auch in Querrichtung durch die vorteilhafte Staffelung so optimiert, dass die gezeigte Sitzanordnung auch in Kabinen mit einer Breite in einem Bereich von 3,7 m bis 4,5 m realisierbar ist.

Fig. 2 zeigt einen Ausschnitt des linken äußeren Passagiersitzbereich 10 mit dem ersten Sitzmodul 16 und dem zweiten Sitzmodul 18. Die Darstellung erfolgt aus Richtung des dritten Sitzmoduls 20, das in dieser Darstellung ausgelassen wurde.

Hier wird beispielhaft dargestellt, dass die klappbare Fußauflage 26 beispielhaft an der Ottomane 24 des benachbarten ersten Sitzmoduls 16 schwenkbar gelagert ist. Sie kann um eine Scharnierachse 36 in eine vertikal nach oben gerichtete Verstauposition oder in eine waagerechte Benutzungsposition verschränkt werden. Ist die Fußauflage 26 nach oben geklappt, kann sie sich bündig in eine Verkleidung 38 der Ottomane 24 legen. Dann ist ein vor dem Sitz 22 befindlicher Fußboden 40 frei, so dass der Sitz 22 erreicht werden kann. Lediglich der Vollständigkeit halber wird der Sitz 22 mit einer Sitzfläche 42, eine Rückenlehne 44 und einer Kopfstütze 46 gezeigt. Die Sitzfläche 42 und die Rückenlehne 44 könnten in Längsrichtung x verfahren werden, so dass der Sitz 22 eine flache Sitz- bzw. Liegeposition einnehmen kann.

Des Weiteren kann exemplarisch ein Bildschirm 48 schwenkbar vorgesehen sein, der zum Erreichen des Sitzes 22 ebenfalls zu der Ottomane 24 des benachbarten ersten Sitzmoduls 16 verschwenkt werden kann. Das erste Sitzmodul 16 weist indes einen bevorzugt feststehenden Bildschirm 50 auf. Es ist denkbar, den Bildschirm 48 des zweiten Sitzmoduls 18 auch aus der Wandung 32 herausfahrbar zu integrieren.

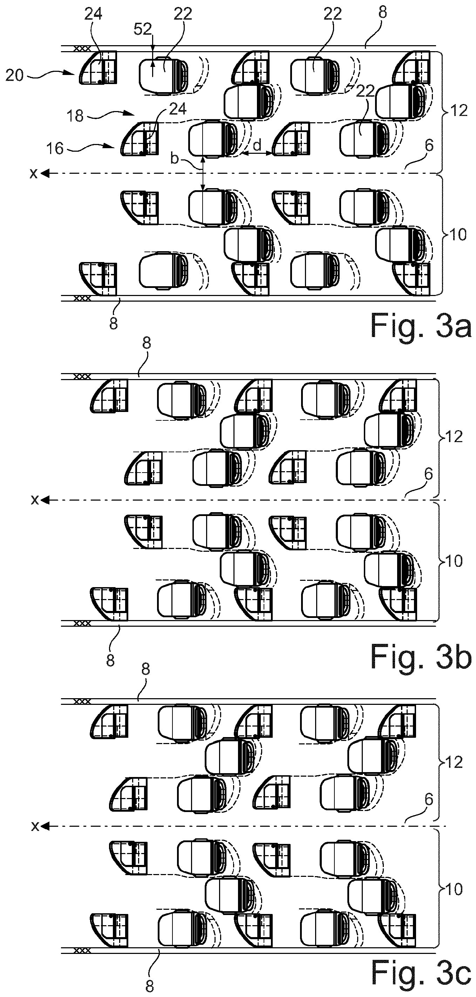

Die Darstellung in Fig. 1 ist eines von vielen möglichen Ausführungsbeispielen. Je nach Anforderung kann die Sitzanordnung 2 auch modifiziert werden, indem axiale oder laterale Abstände angepasst werden. Dies wird beispielsweise in den Figuren 3a bis 3c dargestellt. In Fig. 3a ist etwa bei den dritten Sitzmodulen 20 ein größtmöglicher Abstand 52 zwischen dem Sitz 22 und der Kabinenwandung 8 vorgesehen. Dies ist mit einer größtmöglichen Kopffreiheit gleichzusetzen. Gleichzeitig ist hier die Durchgangsbreite d im Vergleich zu Fig. 1 stark erhöht. Die einzelnen Sitzmodule 16, 18 und 20 sind folglich deutlich weiter voneinander beanstandet. Das Komfortempfinden könnte hierdurch noch weiter verbessert werden, doch der Raumgewinn wird im Vergleich zu Fig. 1 reduziert. Durch die größeren Abstände könnte weiterhin auch eine größere Gangbreite b erreicht werden.

In Fig. 3b ist der Abstand 52 zu der Kabinenwandung 8 etwas geringer, jedoch noch größer als in Fig. 1 dargestellt. Die Durchgangsbreite d ist etwas geringer, ebenso die Gangbreite b. Fig. 3c entspricht weitgehend der Fig. 1 und könnte die engste Anordnung darstellen.

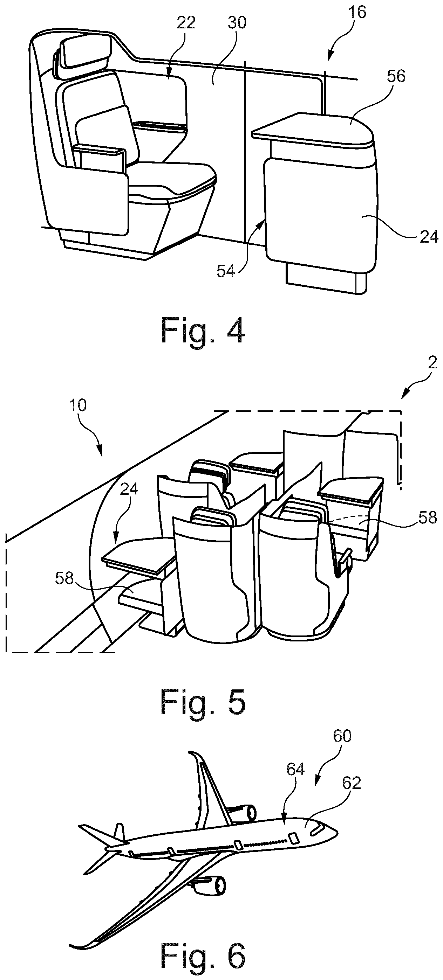

In Fig. 4 wird das erste Sitzmodul 16 in einer perspektivischen Darstellung gezeigt. Hier ist die Höhe der den Sitz 22 teilweise umlaufenden Wandung 30 dargestellt. Die den Sitz 22 zugeordnete Ottomane 24 weist an einer Innenseite 54 eine hier nicht dargestellte Fußauflage auf. An einer Oberseite der Ottomane 24 befindet sich eine Ablagefläche 56. Dem Kabinenpersonal kann dadurch ermöglicht werden, bei dem Servieren von Speisen und Getränken beispielsweise ein Tablett abzulegen. Dies könnte beispielsweise auch für einen Benutzer des Sitzes 22 des zweiten Sitzmoduls 18 gedacht sein.

Es kann auch vorteilhaft sein, einen ausziehbaren Tisch oder einen segmentierten Tisch statt oder in Kombination mit der Ablagefläche 56 vorzusehen. Ein ausziehbarer Tisch kann möglicherweise auch für eine Befestigung einer IFE-Einheit oder eines ausklappbaren Bildschirmes vorgesehen sein.

Fig. 5 zeigt die drei Sitzmodule 16, 18 und 20 des linken äußeren Passagiersitzbereichs 10. Dort ist der Versatz zwischen dem ersten Sitzmodul 16 und dem zweiten Sitzmodul 18 sehr deutlich. Weiterhin wird eine Fußauflage 58 einer Ottomane 24 neben dem Sitz 22 des zweiten Sitzmoduls 18 und des ersten Sitzmoduls 16 ersichtlich.

Schließlich zeigt Figur 6 ein Flugzeug 60 mit einem Rumpf 62 und einer darin ausgebildeten Kabine 64, in der mindestens eine derartige Sitzanordnung 2 vorgesehen ist.

Ergänzend sei darauf hingewiesen, dass "aufweisend" keine anderen Elemente oder Schritte ausschließt, und "ein" oder "eine" keine Vielzahl ausschließt. Bezugszeichen in den Ansprüchen sind nicht als Einschränkung anzusehen.

### BEZUGSZEICHEN

- 2: Sitzanordnung
- 4: Kabine
- 6: Gang
- 8: Kabinenwandung
- 10: Passagiersitzbereich
- 12: Passagiersitzbereich
- 14: Sitzreihe
- 16: erstes Sitzmodul
- 18: zweites Sitzmodul
- 20: drittes Sitzmodul
- 22: Sitz
- 23: lateral außenliegende Begrenzung
- 24: Ottomane
- 25: lateral innenliegende Begrenzung
- 26: klappbare Fußauflage
- 28: Zugang
- 30: Armlehne
- 32: Trennwand
- 34: Bauraum
- 36: Scharnierachse
- 38: Verkleidung
- 40: Fußboden
- 42: Sitzfläche
- 44: Rückenlehne
- 46: Kopfstütze
- 48: Bildschirm
- 50: Bildschirm
- 52: Abstand
- 54: Innenseite
- 56: Ablagefläche
- 58: Fußauflage
- 60: Flugzeug / Transportmittel
- 62: Rumpf
- 64: Kabine

- b: Gangbreite
- d: Durchgangsbreite
- l: Erstreckungslänge
- x: Längsrichtung / Längsachse

## Patentansprüche

1. Sitzanordnung (2) für eine Kabine (4) eines Transportmittels, aufweisend:
- einen in einer Längsrichtung (x) der Kabine (4) angeordneter Gang (6),
- zwei voneinander beabstandete, zumindest bereichsweise parallel zu dem Gang (6) ausgerichtete und die Kabine (4) seitlich begrenzende Kabinenwandungen (8),
- zwei äußere Passagiersitzbereiche (10, 12), die durch den Gang (6) voneinander getrennt sind und jeweils an einer der zwei Kabinenwandungen (8) angrenzen,
wobei die äußeren Passagiersitzbereiche (10, 12) mindestens eine Sitzreihe (14) mit jeweils einem innenliegenden, zum Gang (6) gewandten, ersten Sitzmodul (16), einem dazu benachbarten mittleren, zweiten Sitzmodul (18) und einem an die jeweilige Kabinenwandung (8) angrenzenden, äußeren dritten Sitzmodul (20) aufweisen,
wobei die ersten und dritten Sitzmodule (16, 18, 20) jeweils einen Sitz (22) und eine dem Sitz zugeordnete Ottomane (26) oder eine von dem jeweiligen Sitz beabstandete Fußauflage (26) aufweisen und das zweite Sitzmodul (18) einen Sitz (22) und eine von diesem Sitz beabstandeten Fußauflage (26) aufweist,
wobei das dritte Sitzmodul (20) in Längsrichtung (x) zu dem zweiten Sitzmodul (18) derart versetzt ist, dass der Sitz (22) des dritten Sitzmoduls (20) in Querrichtung an die Fußauflage (26) des zweiten Sitzmoduls (18) anschließt,
wobei die Fußauflage des zweiten Sitzmoduls (18) eine klappbare Fußauflage (26) ist, die dazu ausgebildet ist, einen unter der Fußauflage (26) befindlichen Fußboden (40) zum Erreichen des Sitzes (22) des zweiten Sitzmoduls (18) bedarfsweise freizugeben, und
wobei die Sitze (22) der Sitzmodule (16, 18, 20) jeweils eine Sitzrichtung aufweisen, die parallel zu der Längsachse (x) verlaufen und gleichsinnig sind.

2. Sitzanordnung (2) nach Anspruch 1,
wobei die Ottomanen und/oder die Fußauflage (24, 26) der zweiten und dritten Sitzmodule (18, 20) eine geringere Breite als der zugehörige Sitz (22) aufweisen.

3. Sitzanordnung (2) nach Anspruch 1 oder 2,
wobei eine lateral außenliegende Begrenzung (23) des Sitzes (22) des zweiten Sitzmoduls (18) näher an der zu dem jeweiligen Passagiersitzbereich (10, 12) gehörenden Kabinenwandung (8) liegt als eine lateral innenliegende (25) Begrenzung des Sitzes (22) des benachbarten dritten Sitzmoduls (20).

4. Sitzanordnung (2) nach einem der vorhergehenden Ansprüche,
wobei das erste Sitzmodul (16) und das zweite Sitzmodul (18) in Längsrichtung (x) derart zueinander versetzt sind, dass die Armlehnen (30) der Sitze (22) dieser beiden Sitzmodule (16, 18) sich in Längsrichtung (x) im Wesentlichen nicht überschneiden.

5. Sitzanordnung (2) nach Anspruch 4,
wobei der Sitz (22) des ersten Sitzmoduls (16) in Längsrichtung (x) vor dem Sitz (22) des zweiten Sitzmoduls (18) liegt.

6. Sitzanordnung (2) nach einem der vorhergehenden Ansprüche
wobei die mindestens eine Sitzreihe (14) mehrere Sitzreihen (14) aufweist,
wobei zwischen den ersten Sitzmodulen (16) und zweiten Sitzmodulen (18) aufeinanderfolgender Sitzreihen (14) ein Abstand von mindestens 22 cm vorliegt, so dass das zweite Sitzmodul (18) und das dritte Sitzmodul (18, 20) durch einen gemeinsamen Durchgang erreichbar sind.

7. Sitzanordnung (2) nach einem der vorhergehenden Ansprüche,
wobei die Sitzmodule (16, 18, 20) eine zumindest bereichsweise den jeweiligen Sitz (22) umlaufende Trennwand (32) aufweisen.

8. Sitzanordnung (2) nach einem der vorhergehenden Ansprüche,
wobei das erste Sitzmodul (16) einen in den Gang (6) weisenden Zugang (28) aufweist.

9. Sitzanordnung (2) nach einem der vorhergehenden Ansprüche,
wobei mindestens eine der Ottomanen (24) oder der Fußauflage (26) ein Staufach und/oder eine Ablagefläche (56) und/oder einen Tisch aufweisen.

10. Kabine (4) für ein Transportmittel, aufweisend mindestens eine Sitzanordnung (2) nach einem der vorhergehenden Ansprüche.

11. Kabine (4) nach Anspruch 10, wobei die Kabine (4) eine Breite aufweist, die in einem Bereich von 3,7 bis 4,5 m liegt.

12. Transportmittel (60), aufweisend einen Rumpf (62) und mindestens eine darin ausgebildete Kabine (4) nach Anspruch 10 oder 11.

13. Transportmittel (60) nach Anspruch 12, wobei das Transportmittel (60) ein Verkehrsflugzeug ist.

## Claims

1. Seat assembly (2) for a cabin (4) of a means of transportation, having:
- an aisle (6) which is arranged in a longitudinal direction (x) of the cabin (4),
- two mutually spaced cabin walls (8) which are oriented at least regionally parallel to the aisle (6) and laterally delimit the cabin (4),
- two outer passenger seat regions (10, 12) which are separated from one another by the aisle (6) and in each case adjoin one of the two cabin walls (8),
wherein the outer passenger seat regions (10, 12) have at least one row of seats (14) with a respective inner first seat module (16) which faces the aisle (6), a central second seat module (18) adjacent to the first seat module, and an outer third seat module (20) adjoining the respective cabin wall (8),
wherein each of the first and third seat modules (16, 18, 20) has a seat (22) and an ottoman (26) paired with the seat or a foot rest (26) at a distance from the respective seat, and the second seat module (18) has a seat (22) and a foot rest (26) at a distance from this seat,
wherein the third seat module (20) is offset from the second seat module (18) in the longitudinal direction (x) such that the seat (22) of the third seat module (20) adjoins the foot rest (26) of the second seat module (18) in the transverse direction,
wherein the foot rest of the second seat module (18) is a foldable foot rest (26) which is configured to clear a floor (40) located below the foot rest (26) for reaching the seat (22) of the second seat module (18) if required, and
wherein the seats (22) of the seat modules (16, 18, 20) in each case have a seat direction, said seat directions running parallel to the longitudinal axis (x) and being co-directional.

2. Seat assembly (2) according to Claim 1,
wherein the ottomans and/or the foot rest (24, 26) of the second and third seat modules (18, 20) have a smaller width than the associated seat (22).

3. Seat assembly (2) according to Claim 1 or 2,
wherein a laterally external boundary (23) of the seat (22) of the second seat module (18) is located closer to the cabin wall (8) belonging to the respective passenger seat region (10, 12) than a laterally internal boundary (25) of the seat (22) of the adjacent third seat module (20).

4. Seat assembly (2) according to one of the preceding claims,
wherein the first seat module (16) and the second seat module (18) are offset from one another in the longitudinal direction (x) such that the armrests (30) of the seats (22) of these two seat modules (16, 18) substantially do not overlap in the longitudinal direction (x).

5. Seat assembly (2) according to Claim 4,
wherein the seat (22) of the first seat module (16) is located in front of the seat (22) of the second seat module (18) in the longitudinal direction (x).

6. Seat assembly (2) according to one of the preceding claims,
wherein the at least one row of seats (14) has a plurality of rows of seats (14),
wherein a distance of at least 22 cm is present between the first seat modules (16) and second seat modules (18) of successive rows of seats (14), such that the second seat module (18) and the third seat module (18, 20) may be reached by a common through-passage.

7. Seat assembly (2) according to one of the preceding claims,
wherein the seat modules (16, 18, 20) have a partition (32) which at least regionally runs around the respective seat (22).

8. Seat assembly (2) according to one of the preceding claims,
wherein the first seat module (16) has an access (28) facing into the aisle (6).

9. Seat assembly (2) according to one of the preceding claims,
wherein at least one of the ottomans (24) or the foot rests (26) has a stowage compartment and/or a placement surface (56) and/or a table.

10. Cabin (4) for a means of transportation having at least one seat assembly (2) according to one of the preceding claims.

11. Cabin (4) according to Claim 10, wherein the cabin (4) has a width which is in a range of 3.7 to 4.5 m.

12. Means of transportation (60) having a fuselage (62) and at least one cabin (4) configured therein according to Claim 10 or 11.

13. Means of transportation (60) according to Claim 12, wherein the means of transportation (60) is a commercial aircraft.

## Revendications

1. Agencement de sièges (2) pour une cabine (4) d'un moyen de transport, présentant :
- un couloir (6) agencé dans une direction longitudinale (x) de la cabine (4),
- deux parois de cabine (8) espacées l'une de l'autre, orientées au moins par zones parallèlement au couloir (6) et délimitant latéralement la cabine (4),
- deux zones de sièges de passagers extérieures (10, 12), qui sont séparées l'une de l'autre par le couloir (6) et adjacentes chacune à l'une des deux parois de cabine (8),
les zones de sièges de passagers extérieures (10, 12) présentant au moins une rangée de sièges (14) avec respectivement un premier module de siège (16) situé à l'intérieur, tourné vers le couloir (6), un deuxième module de siège (18) central voisin de celui-ci et un troisième module de siège (20) extérieur, adjacent à la paroi de cabine (8) respective,
les premier et troisième modules de siège (16, 18, 20) présentant chacun un siège (22) et un ottoman (26) associé au siège ou un repose-pieds (26) espacé du siège respectif, et le deuxième module de siège (18) présentant un siège (22) et un repose-pieds (26) espacé de ce siège, le troisième module de siège (20) étant décalé dans la direction longitudinale (x) par rapport au deuxième module de siège (18) de telle sorte que le siège (22) du troisième module de siège (20) se raccorde dans la direction transversale au repose-pieds (26) du deuxième module de siège (18),
le repose-pieds du deuxième module de siège (18) étant un repose-pieds rabattable (26) qui est configuré pour libérer, si nécessaire, un plancher (40) se trouvant sous le repose-pieds (26) pour atteindre le siège (22) du deuxième module de siège (18), et
les sièges (22) des modules de siège (16, 18, 20) présentant chacun une direction de siège qui est parallèle à l'axe longitudinal (x) et qui est dans le même sens.

2. Agencement de sièges (2) selon la revendication 1, les ottomans et/ou le repose-pieds (24, 26) des deuxième et troisième modules de siège (18, 20) présentant une largeur inférieure à celle du siège associé (22).

3. Agencement de sièges (2) selon la revendication 1 ou 2,
une délimitation extérieure latérale (23) du siège (22) du deuxième module de siège (18) étant plus proche de la paroi de cabine (8) appartenant à la zone de sièges de passagers respective (10, 12) qu'une délimitation intérieure latérale (25) du siège (22) du troisième module de siège voisin (20).

4. Agencement de sièges (2) selon l'une quelconque des revendications précédentes,
le premier module de siège (16) et le deuxième module de siège (18) étant décalés l'un par rapport à l'autre dans la direction longitudinale (x) de telle sorte que les accoudoirs (30) des sièges (22) de ces deux modules de siège (16, 18) ne se chevauchent essentiellement pas dans la direction longitudinale (x).

5. Agencement de sièges (2) selon la revendication 4, le siège (22) du premier module de siège (16) étant situé en avant du siège (22) du deuxième module de siège (18) dans la direction longitudinale (x).

6. Agencement de sièges (2) selon l'une quelconque des revendications précédentes,
l'au moins une rangée de sièges (14) présentant plusieurs rangées de sièges (14),
une distance d'au moins 22 cm étant présente entre les premiers modules de siège (16) et les deuxièmes modules de siège (18) de rangées de sièges (14) successives, de telle sorte que le deuxième module de siège (18) et le troisième module de siège (18, 20) peuvent être atteints par un passage commun.

7. Agencement de sièges (2) selon l'une quelconque des revendications précédentes,
les modules de siège (16, 18, 20) présentant une paroi de séparation (32) entourant au moins par zones le siège respectif (22).

8. Agencement de sièges (2) selon l'une quelconque des revendications précédentes,
le premier module de siège (16) présentant un accès (28) orienté vers le couloir (6).

9. Agencement de sièges (2) selon l'une quelconque des revendications précédentes,
au moins l'un des ottomans (24) ou du repose-pieds (26) présentant un compartiment de rangement et/ou une surface de dépôt (56) et/ou une table.

10. Cabine (4) pour un moyen de transport, présentant au moins un agencement de sièges (2) selon l'une quelconque des revendications précédentes.

11. Cabine (4) selon la revendication 10, la cabine (4) présentant une largeur qui se situe dans une plage de 3,7 à 4,5 m.

12. Moyen de transport (60), présentant une coque (62) et au moins une cabine (4) formée dans celle-ci selon la revendication 10 ou 11.

13. Moyen de transport (60) selon la revendication 12, le moyen de transport (60) étant un avion commercial.
